# EUROPÄISCHE PATENTSCHRIFT

(11) **EP 3 164 615 B1**
(45) Veröffentlichungstag und Bekanntmachung des Hinweises auf die Patenterteilung: **22.08.2018**
(21) Anmeldenummer: 15733340.2
(22) Anmeldetag: 03.06.2015
(51) Int. Cl.: F16D 13/69, F16D 13/64

(54) **KUPPLUNGSSCHEIBE**
CLUTCH DISK
DISQUE D'EMBRAYAGE

(30) Priorität: 03.07.2014 DE 102014212949
(43) Veröffentlichungstag der Anmeldung: 10.05.2017
(73) Patentinhaber: Schaeffler Technologies AG & Co. KG, 91074 Herzogenaurach (DE)
(72) Erfinder: BEXEL, Andreas, 67361 Freisbach (DE); KESSLER, Michael, 77815 Bühl (DE); KIMMIG, Karl-Ludwig, 77883 Ottenhöfen (DE); VOIT, Alexander, 77815 Bühl (DE)
(86) Internationale Anmeldenummer: PCT/DE2015/200346
(87) Internationale Veröffentlichungsnummer: WO 2016/000705

(56) Entgegenhaltungen:
- DE-A1-102010 024 460
- GB-A- 566 650
- GB-A- 2 371 097
- JP-A- H06 159 386
- US-A- 2 630 199
- US-A- 4 858 742

## Beschreibung

Die Erfindung betrifft eine Kupplungsscheibe für eine Reibungskupplung mit zwei jeweils auf einem Trägerteil aufgenommenen Reibbelägen mit voneinander abgewandten Reibflächen und zumindest einem axial zwischen den Trägerteilen angeordneten, axial wirksamen Federelement sowie einer die Trägerteile radial innerhalb der Reibbeläge aufnehmenden Mitnehmerscheibe, wobei eine an Ausschnitten der Reibbeläge wirksame Axialverbindung die beiden Trägerteile entgegen der Wirkung des zumindest einen Federelements axial verlagerbar aufnimmt.

Eine gattungsgemäße Kupplungsscheibe ist beispielsweise aus der DE 10 2010 024 460 A1 bekannt. Hierbei ist auf jeweils einem Trägerteil ein Reibbelag aufgenommen. Die Trägerteile werden miteinander axial elastisch unter Zwischenlegung einer Belagfederung verbunden, wobei die Reibflächen der Reibbeläge voneinander abgewandt angeordnet sind, so dass die Kupplungsscheibe mittels ihrer Reibbeläge zwischen zwei Gegenreibflächen einer Reibungskupplung unter Bildung eines Reibschlusses axial eingespannt werden kann. Die Trägerteile werden im Bereich der Reibbeläge von einer Axialverbindung gehalten, welche aus über den Umfang verteilt angeordneten Nietelementen gebildet ist. Zur Darstellung der Belagfederung sind axial zwischen den Trägerteilen axial wirksame Federelemente angeordnet, die die Trägerteile gegen Anschläge der Nietelemente vorspannen. Die Federelemente sind in der Regel so ausgelegt, dass durch die Anschläge der Nietelemente im axial unbelasteten Zustand keine oder nur geringe Vorspannung entsteht. Die Schließ- und Setzköpfe der Nietelemente sind dabei axial in die Reibbeläge eingelassen. Zwischen den Stirnseiten der Setz- und Schließköpfe und den Reibflächen der Reibbeläge im Neuzustand wird dabei die Verschleißreserve gebildet.

Aufgabe der Erfindung ist, eine Kupplungsscheibe vorzuschlagen, die bezüglich ihres axialen Bauraums und ihrer Verschleißreserve vorteilhaft weitergebildet ist.

Die Aufgabe wird durch den Gegenstand des Anspruchs 1 gelöst. Die von diesem abhängigen Ansprüche geben vorteilhafte Ausführungsformen des Gegenstands des Anspruchs 1 wieder.
Die vorgeschlagene Kupplungsscheibe ist für eine Reibungskupplung vorgesehen, wobei die jeweils auf einem Trägerteil aufgenommenen Reibbeläge mit voneinander abgewandten Reibflächen zwischen den Gegenreibflächen der Reibungskupplung zur Bildung eines Reibschlusses axial verspannbar sind. Zur Bereitstellung einer Belagfederung ist axial zwischen den Trägerteilen zumindest ein axial wirksames Federelement vorgesehen. Die Trägerteile und gegebenenfalls das zumindest eine Federelement sind radial innerhalb der Reibbeläge an einer Mitnehmerscheibe aufgenommen, beispielsweise vernietet. Die Mitnehmerscheibe kann das in die Kupplungsscheibe eingeleitete Drehmoment direkt auf ein Rotationselement, beispielsweise eine Getriebeeingangswelle, einen Antriebskorb, ein Antriebsblech oder dergleichen übertragen. Alternativ können zwischen der Mitnehmerscheibe und dem Rotationselement ein Torsionsschwingungsdämpfer oder an der Mitnehmerscheibe ein Fliehkraftpendel angeordnet sein. Die Reibbeläge weisen Ausschnitte auf, in denen eine Axialverbindung die beiden Trägerteile entgegen der Wirkung des zumindest einen Federelements axial begrenzt verlagerbar zur Bildung der Belagfederung aufnimmt.

Um die axiale Baubreite bei gleichbleibender Verschleißreserve zu erniedrigen, die Verschleißreserve bei gleich bleibendem axialem Bauraum zu erhöhen oder einen Zustand zwischen diesen Extremzuständen einzustellen, übergreift zumindest eines der beiden Trägerteile das zumindest eine Federelement in einem Kontaktbereich gegenüber der Axialverbindung und weist axial in Richtung des anderen Trägerteils Einsenkungen auf. Hierbei kann das zumindest eine Federelement im Wesentlichen dieselben Ausschnitte wie die Reibbeläge zur Aufnahme der Axialverbindung aufweisen. Durch die Ausschnitte an dem zumindest einen Federelement und die Einsenkungen an zumindest einem Trägerteil kann der Anschlag der Einsenkungen an der Axialverbindung axial in Richtung des anderen Trägerteils rückverlagert werden, so dass der den Reibbelag tragende Bereich des Trägerteils den axialen Anschlag der Axialverbindung im axial entspannten Zustand der Reibbeläge beispielsweise bei geöffneter Reibungskupplung teilweise oder vollständig überschneidet. Im vollständig axial vorgespannten Zustand der Reibbeläge beispielsweise bei geschlossener Reibungskupplung überschneiden oder übergreifen die Einsenkungen das zumindest eine Federelement axial, beispielsweise bis zum Kontakt mit dem anderen Trägerteil. Hierdurch kann eine Reibbelagsstärke in Höhe der Stärke des zumindest einen Federelements genutzt und dadurch die Verschleißreserve des Reibbelags erhöht werden.

Die Axialverbindung ist gemäß einer vorteilhaften Ausführungsform aus über den Umfang verteilt angeordneten Nietelementen gebildet, wobei jeweils ein Nietelement ein Trägerteil fest aufnimmt. Das andere Trägerteil ist dabei mittels des zumindest einen Federelements axial beabstandet gegenüber dem einen Trägerteil, wobei dieser Abstand durch einen Anschlag des Nietelements begrenzt wird. Das zumindest eine Federelement ist hierbei um die Nietelemente jeweils so weit ausgespart, dass an zumindest einem Trägerteil die Nietelemente umgebende, napfförmige Einsenkungen in Richtung des anderen Trägerteils vorgesehen werden können. Hierbei kann ein Trägerteil an allen Nietelementen fest aufgenommen sein.

Gemäß einer vorteilhaften Ausführungsform sind lediglich an einem der Trägerteile napfförmige Einsenkungen vorgesehen. Das andere Trägerteil ist in einem Kontaktbereich wie Nietbereich mit den Nietelementen plan ausgebildet. Alternativ können an beiden Trägerteilen Einsenkungen vorgesehen sein, wobei ein Trägerteil mit den Nietelementen fest verbunden sein kann, so dass eine im Wesentlichen plane, feste Oberfläche aus den Anschlägen der Nietelemente und diesem Trägerteil gebildet ist. Im Idealfall kann hierdurch die maximale Stärke des Anschlags zur Erhöhung der Verschleißreserve genutzt werden, da im Verschleißzustand der Kupplungsscheibe Anschläge und Trägerteil gleichermaßen die Verschleißgrenze nach Abbau des Reibbelags bilden.

Gemäß einer weiteren vorteilhaften Ausführungsform können an beiden Trägerteilen napfförmige Einsenkungen mit planen Nietbereichen über den Umfang abwechseln. Hierbei liegt jeweils eine napfförmige Einsenkung eines Trägerteils einem planen Nietbereich des anderen Trägerteils axial gegenüber. Hierdurch wechselt die elastische Vorspannung der Trägerteile unter Einwirkung des zumindest einen Federelements über den Umfang von Nietelement zu Nietelement. Die Trägerteile können dabei bei gerader Anzahl über den Umfang abwechselnder planer Nietbereiche und Einsenkungen als Gleichteile ausgebildet sein, wobei diese um einen Nietelementabstand in Umfangsrichtung versetzt zueinander angeordnet sind.

Die Höhe der Einsenkungen kann entsprechend der Materialstärke des zumindest einen Federelements erfolgen. Beispielsweise können dabei die Trägerteile in einem axial vorgespannten Zustand der Reibbeläge im Bereich der Einsenkungen aneinander anliegen. In diesem Fall ist die Belagfederung unter axialer Vorspannung der Reibbeläge beispielsweise bei geschlossener, das maximale Drehmoment übertragender Reibungskupplung vollständig aufgebraucht.

Das zumindest eine Federelement kann aus einem oder mehreren axial aneinander gelegten ringförmigen Blechteilen mit elastischem Federanteil gebildet sein. Hierzu können die Blechteile wellig ausgebildet sein, entsprechende Aus- oder Durchstellungen oder andere die axiale elastische Funktion bereitstellende Einrichtungen aufweisen. Alternativ kann das zumindest eine Federelement aus über den Umfang verteilten Federsegmenten gebildet sein. Das zumindest eine Federelement kann verliersicher mit einem oder beiden Trägerteilen verbunden wie eingehängt sein. In bevorzugter Weise ist das zumindest eine Federelement zusammen mit den Trägerteilen an der Mitnehmerscheibe aufgenommen.

Zur Erhöhung der Stabilität der Trägerteile können eines oder beide Trägerteile eine umlaufende, axial ausgeprägte Sicke aufweisen.

Die Nietelemente können über den Umfang verteilt auf einem einzigen Durchmesser angeordnet sein. Alternativ können Nietelemente auf zwei oder mehreren Teilkreisen unterschiedlichen Durchmessers angeordnet sein.

Die Erfindung wird anhand der in den Figuren 1 bis 11 dargestellten Ausführungsbeispiels näher erläutert. Dabei zeigen:
- Figur 1: einen Teilschnitt durch eine Kupplungsscheibe,
- Figur 2: eine gegenüber der Kupplungsscheibe der Figur 1 abgeänderte Kupplungsscheibe in derselben Darstellung,
- Figur 3: ein Detail der Kupplungsscheibe der Figur 1,
- Figur 4: ein Detail einer gegenüber der Kupplungsscheibe der Figur 1 abgeänderten Kupplungsscheibe,
- Figur 5: eine gegenüber der Kupplungsscheibe der Figur 1 abgeänderte Kupplungsscheibe mit zwei Nietreihen im Teilschnitt,
- Figur 6: eine gegenüber der Kupplungsscheibe der Figur 5 abgeänderte Kupplungsscheibe mit geänderter Orientierung der Nietelemente in derselben Darstellung,
- Figur 7: eine gegenüber den Kupplungsscheiben der Figuren 5 und 6 abgeänderte Reibungskupplung mit gedoppelten Federelementen,
- Figur 8: eine 3D-Detailansicht auf ein Federsegment und dahinterliegendes Trägerteil,
- Figur 9: eine 3D-Ansicht der Trägerteile der Kupplungsscheibe der Figur 1,
- Figur 10: eine 3D-Ansicht der Trägerteile der Kupplungsscheibe der Figur 4 und
- Figur 11: eine 3D-Ansicht der Trägerteile einer gegenüber den übrigen Kupplungsscheiben der Figuren 1 bis 10 abgeänderten Kupplungsscheibe.

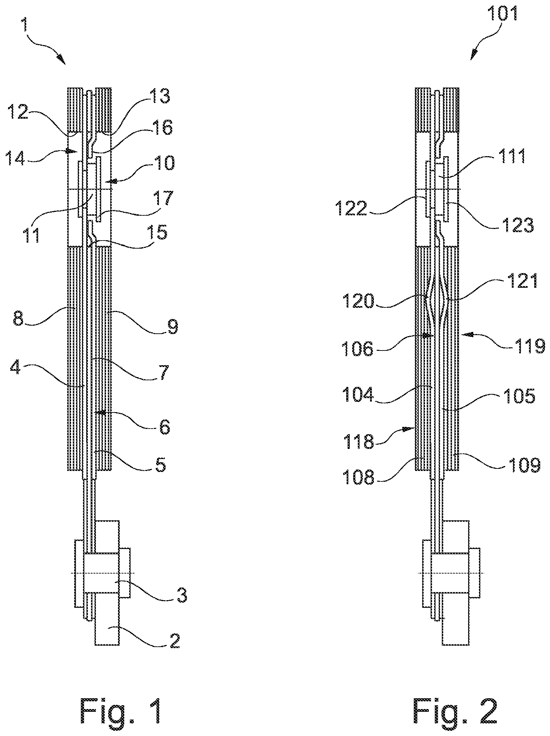

Die Figur 1 zeigt die Kupplungsscheibe 1 im Teilschnitt. Die Mitnehmerscheibe 2 ist mit einem Rotationselement, beispielsweise mittels einer Nabe mit einer Getriebeeingangswelle eines Getriebes drehschlüssig verbunden. Gegebenenfalls kann zwischen der Mitnehmerscheibe 2 und dem Rotationselement eine Drehschwingungsisolationseinrichtung beispielsweise mit einem Torsionsschwingungsdämpfer und/oder einem Fliehkraftpendel vorgesehen sein. Die Mitnehmerscheibe 2 nimmt radial außen mittels der über den Umfang angeordneten Niete 3 die Trägerteile 4, 5 und das in dem gezeigten Ausführungsbeispiel als über den Umfang verteilte Federsegmente 7 ausgebildete, axial zwischen den Trägerteilen 4, 5 wirksame Federelement 6 auf. An den beiden Trägerteilen 4, 5 ist jeweils ein Reibbelag 8, 9 aufgenommen, beispielsweise verklebt oder verpresst. Im radialen Bereich der Reibbeläge 8, 9 ist die aus den über den Umfang verteilt angeordneten Nietelementen 11 gebildete Axialverbindung 10 vorgesehen. Hierzu weisen die Reibbeläge 8, 9 entsprechende Ausschnitte 12, 13 zur Aufnahme der Axialverbindung 10. Das Trägerteil 4 ist hierbei im Nietbereich 14 um die Nietelemente 11 plan ausgebildet und fest mit den Nietelementen 11 verbunden. Die Federsegmente 7 weisen Ausschnitte 15 auf, die hier auf demselben Durchmesser wie die Ausschnitte 12, 13 ausgenommen sind. Hierdurch können an dem Trägerteil 5 im Nietbereich 14 die napfförmigen Einsenkungen 16 in Richtung des Trägerteils 4 eingebracht werden.

Die Figur 1 zeigt hierbei den vollständig axial vorgespannten Zustand der Reibbeläge 8, 9, beispielsweise bei vollständig geschlossener Reibungskupplung. Hierbei übergreifen die napfförmigen Einsenkungen 16 die Federsegmente 7 axial und kommen zur Anlage an das Trägerteil 4. Hierdurch wird axialer Bauraum in Höhe der Federsegmente 7 im axial komprimierten Zustand eingespart, der bei gleicher Reibbelagsstärke der Reibbeläge 8, 9 im Neuzustand verringert werden kann oder bei gleichem axialen Bauraum der Erhöhung der Verschleißreserve der Reibbeläge 8, 9 durch entsprechende Erhöhung deren Stärke dienen kann. Als Verschleißgrenze der Reibbeläge dient hierbei die axiale Stärke der Nietelemente 11, da ein Kontakt dieser mit den Gegenreibflächen der Reibungskupplung das übertragbare Moment verringert. Im entspannten Zustand der Federsegmente 7 werden die Einsenkungen 16 gegen die Anschläge 17 der Nietelemente 11 verlagert, wodurch der axiale Abstand der Trägerteile 4, 5 beziehungsweise der Abstand der Reibbeläge 8, 9 gegeneinander begrenzt wird.

Die Figur 2 zeigt die der Kupplungsscheibe 1 der Figur 1 ähnliche Kupplungsscheibe 101 in derselben Darstellung mit den Trägerteilen 104, 105, den daran befestigten Reibbelägen 108, 109 sowie dem axial zwischen den Trägerteilen 104, 105 angeordneten Federelement 106. Im Unterschied zu der Kupplungsscheibe 1 weisen beide Trägerteile 104, 105 radial innerhalb der Nietelemente 111 jeweils axial in Richtung der Reibflächen 118, 119 der Reibbeläge 108, 109 erweiterte, bevorzugt umlaufende Sicken 120, 121 auf. Diese dienen der Stabilisierung der Trägerteile 104, 105 und erstrecken sich maximal bis zu den Schließ- und Setzköpfen 122, 123 der Nietelemente 111, um eine Erniedrigung der Verschleißreserve der Reibbeläge 108, 109 zu vermeiden.

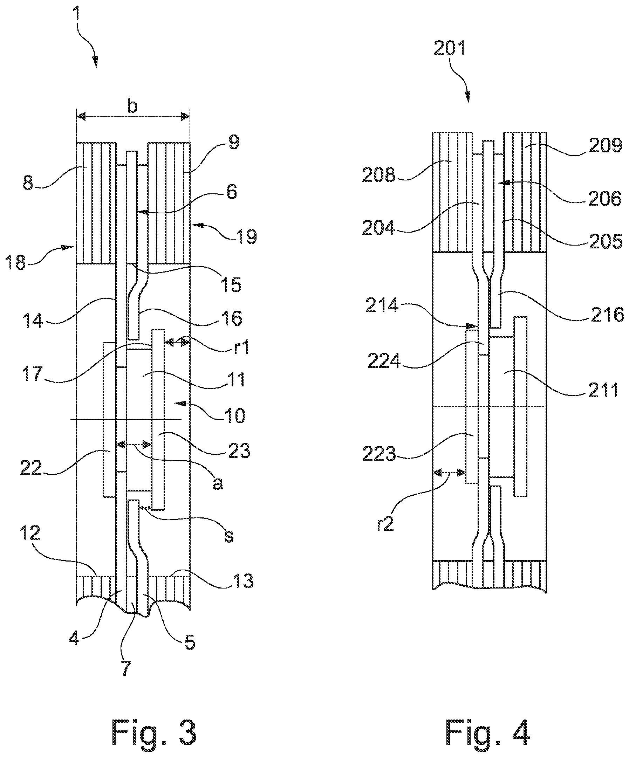

Die Figur 3 zeigt ein vergrößertes Detail der Kupplungsscheibe 1 der Figur 1 mit den Trägerteilen 4, 5 mit den Reibbelägen 8, 9, dem aus den Federsegmenten 7 gebildeten Federelement 6 und den die Axialverbindung 10 bildenden Nietelementen 11. Durch die bis zu den Ausschnitten 12, 13 der Reibbeläge 8, 9 vergrößerten Ausschnitte 15 können im Nietbereich 14 Einsenkungen 16 an dem Trägerteil 5 vorgesehen werden, welche bei gleichem axialem Federweg s zwischen den Einsenkungen 16 und dem Anschlag 17 der Nietelemente 11 zur Darstellung einer Belagfederung der Reibbeläge 8, 9 eine größere Verschleißreserve ermöglichen,indem ein verkürzter axialer Abstand a zwischen den Schließ- und Setzköpfen 22, 23 der Nietelemente 11 eingestellt wird. Hierdurch kann die Verschleißreserve r1 zwischen den Nietelementen 11 und den Reibflächen 18, 19 erhöht, beziehungsweise die axiale Breite b der im axial vorgespannten Zustand dargestellten Kupplungsscheibe 1 erniedrigt werden.

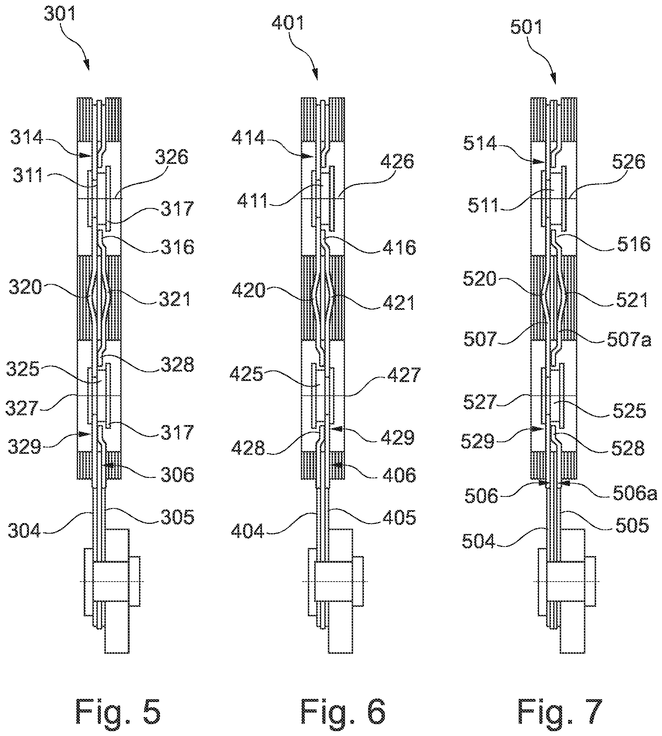

Die Figur 4 zeigt eine gegenüber der Kupplungsscheibe der Figuren 1 bis 3 abgeänderte Kupplungsscheibe 201 in der der Figur 3 entsprechenden Detaildarstellung. Im Unterschied zu der Kupplungsscheibe 1 weist die Kupplungsscheibe 201 auch an dem fest mit den Nietelementen 211 verbundenen Trägerteil 204 im Nietbereich 214 Einsenkungen 224 auf. Hierdurch überschneidet der Schließkopf 223 zumindest teilweise das Trägerteil 204 axial, so dass die Verschleißreserve r2 gegenüber einer planen Ausbildung des Trägerteils vergrößert werden kann. Die Einsenkungen 216 des Trägerteils 205 ermöglichen dabei entsprechend der Ausführungen der Figuren 1 und 3 die Verschleißreserve r1. Insgesamt kann die gesamte Verschleißreserve r1 + r2 um die axiale Stärke des Federelements 206 erhöht werden. Hierbei ist mittels der Einsenkungen 216, 224 eine gleichmäßigere Verteilung der Verschleißreserven r1, r2 auf beide Reibbeläge 208, 209 möglich. Die Figuren 5 bis 7 zeigen Teilschnitte der Kupplungsscheiben 301, 401, 501, die im Unterschied zu den Kupplungsscheiben 1, 101, 201 der Figuren 1 bis 4 über eine zweireihige Anordnung von Nietelementen 311, 325, 411, 425, 511, 525 auf den beiden Teilkreisen 326, 327, 426, 427, 526, 527 unterschiedlichen Durchmessers verfügen. Radial zwischen den Teilkreisen 326, 327, 426, 427, 526, 527 verfügen die Trägerteile 304, 305, 404, 405, 504, 505 jeweils den Sicken 120, 121 der Figur 2 entsprechende umlaufende Sicken 320, 321, 420, 421, 520, 521. Ausführungsformen dieser Kupplungsscheiben sind auch ohne Sicken vorteilhaft. Die Kupplungsscheiben 301, 401, 501 unterscheiden sich in der Anordnung der Nietelemente 311, 325, 411, 425, 511, 525 und der Ausbildung der Federelemente 306, 406, 506, 506a. Im Einzelnen zeigt Figur 5 die Kupplungsscheibe 301, bei der das Trägerteil 304 mit den radial inneren und radial äußeren Nietelementen 311, 325 fest verbunden ist und das Trägerteil 305 entgegen der Wirkung des Federelements 306 axial zwischen der Anlage der Einsenkungen 316, 328 an den Anschlägen 317 und dem Trägerteil 304 verlagerbar ist. Die Figur 6 zeigt die Kupplungsscheibe 401, bei der die Nietelemente 411 und Einsenkungen 416 entsprechend den Nietelementen 311 und Einsenkungen 316 der Figur 5 angeordnet sind. Die radial innerhalb der Nietelemente 411 angeordneten Nietelemente 425 nehmen das Trägerteil 405 fest und das Trägerteil 404 axial verlagerbar auf. Dementsprechend sind die Einsenkungen 428 an dem Trägerteil 404 vorgesehen. Die Kupplungsscheibe 501 der Figur 7 entspricht bezüglich der Anordnung der Nietelemente 511, 525 der Kupplungsscheibe 301 der Figur 5. Im Unterschied zu dieser sind zwei aneinander liegende Federelemente 506, 506a vorgesehen, welche beispielsweise als über den Umfang angeordnete Federsegmente 507, 507a ausgebildet sein können.

Die fest mit den Nietelementen 311, 325, 411, 425, 511, 525 verbundenen Trägerteile 304, 404, 405, 504 sind an den Nietbereichen 314, 329, 414, 429, 514, 529 plan ausgebildet. Entsprechend der Kupplungsscheibe 201 der Figur 4 können auch die mit den Nietelementen 311, 325, 411, 425, 511, 525 fest verbundenen Trägerteile 304, 404, 405, 504 über Einsenkungen verfügen.

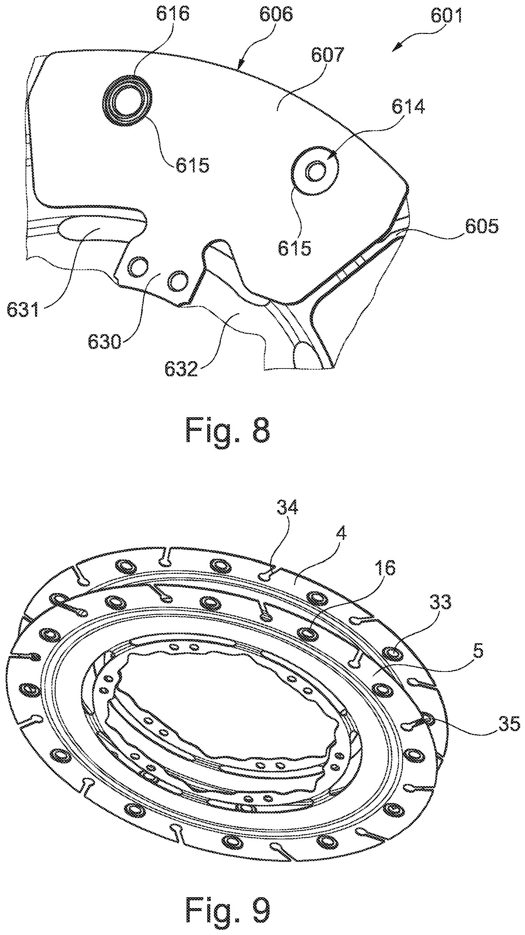

Die Figur 8 zeigt ein Detail einer 3D-Darstellung der Kupplungsscheibe 601 mit dem Trägerteil 605 und dem darauf aufgenommenen Federelement 606 in Form des Federsegments 607, wobei das gegenüberliegende Trägerteil der Übersicht wegen abgenommen ist. Das Federsegment 607 weist die Ausschnitte 615 auf, die die Sicht auf die planen Nietbereiche 614 des Trägerteils 605 und die Einsenkungen 616 freigeben. Das Trägerteil 605 weist dabei über den Umfang abwechselnde Einsenkungen 616 und plane Nietbereiche 614 auf. Die Federsegmente 607 weisen radial nach innen erweiterte Zungen 630 auf, mit denen diese zusammen mit den durch die Ausschnitte 631 freigestellten Stege 632 der Trägerteile 605 und dem nicht dargestellten Trägerteil mit der Mitnehmerscheibe 2 (Figur 1) vernietet sind.

Die Figur 9 zeigt unter Bezug auf die Figuren 1 und 3 eine 3D-Ansicht der Trägerteile 4, 5 der Kupplungsscheibe 1 der Figuren 1 und 3. In dem Trägerteil 4 sind über den Umfang verteilt Öffnungen 33 vorgesehen, an denen eine feste Vernietung der Nietelemente 11 erfolgt. Das Trägerteil 5 weist über den Umfang verteilt die Einsenkungen 16 auf, die das Trägerteil 4 an den Anschlägen 17 der Nietelemente 11 axial gegenüber dem Trägerteil 5 begrenzt entgegen der Wirkung des Federelements 6 halten. In Umfangsrichtung zwischen den Einsenkungen 16 beziehungsweise der Öffnungen 33 sind jeweils radial verlaufende Schlitze 34, 35 zur Erhöhung der Elastizität der Reibbelagebene vorgesehen.

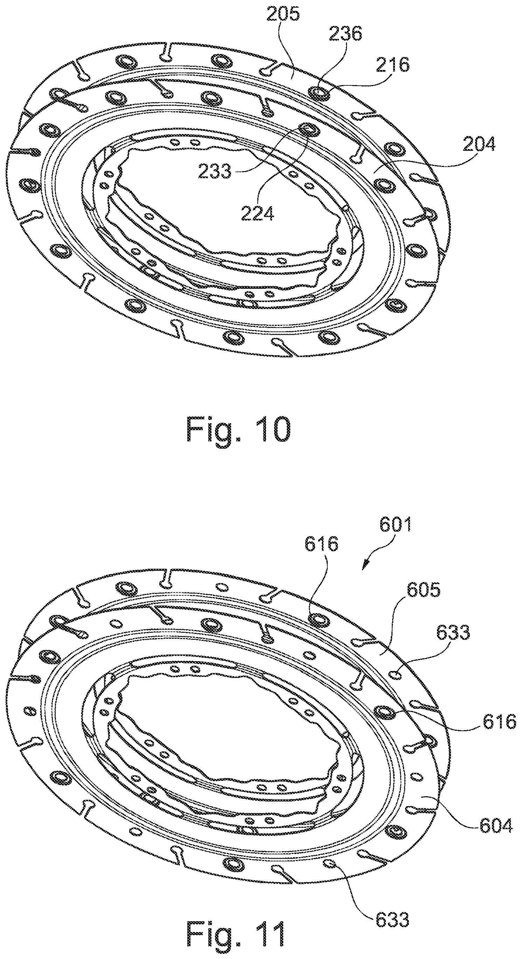

Die Figur 10 zeigt in 3D-Darstellung der Trägerteile 204, 205 der Kupplungsscheibe 201 der Figur 2. Hierbei weisen beide Trägerteile 204, 205 Einsenkungen 216, 224 auf, wobei die Öffnungen 233 der Einsenkungen zur festen Vernietung mit den Nietelementen 211 (Figur 4) einen kleineren Durchmesser aufweisen als die den Einsenkungen 216 zugeordneten Öffnungen 236, die gegenüber den Nietelementen 211 axial begrenzt verlagerbar sind.

Die Figur 11 zeigt in 3D-Darstellung die Trägerteile 604, 605 der im Detail dargestellten Kupplungsscheibe 601 der Figur 8. Hierbei sind die Trägerteile 604, 605 bevorzugt als Gleichteile ausgebildet und weisen über den Umfang abwechselnd angeordnete Einsenkungen 616 und in plane Nietbereiche 614 eingebrachte Öffnungen 633 zur festen Vernietung mit Nietelementen auf.

### Bezugszeichenliste

- 1: Kupplungsscheibe
- 2: Mitnehmerscheibe
- 3: Niet
- 4: Trägerteil
- 5: Trägerteil
- 6: Federelement
- 7: Federsegment
- 8: Reibbelag
- 9: Reibbelag
- 10: Axialverbindung
- 11: Nietelement
- 12: Ausschnitt
- 13: Ausschnitt
- 14: Nietbereich
- 15: Ausschnitt
- 16: Einsenkung
- 17: Anschlag
- 18: Reibfläche
- 19: Reibfläche
- 22: Schließkopf
- 23: Setzkopf
- 33: Öffnung
- 34: Schlitz
- 35: Schlitz
- 101: Kupplungsscheibe
- 104: Trägerteil
- 105: Trägerteil
- 106: Federelement
- 108: Reibbelag
- 109: Reibbelag
- 111: Nietelement
- 118: Reibfläche
- 119: Reibfläche
- 120: Sicke
- 121: Sicke
- 122: Schließkopf
- 123: Setzkopf
- 201: Kupplungsscheibe
- 204: Trägerteil
- 205: Trägerteil
- 206: Federelement
- 208: Reibbelag
- 209: Reibbelag
- 211: Nietelement
- 214: Nietbereich
- 216: Einsenkung
- 223: Schließkopf
- 224: Einsenkung
- 233: Öffnung
- 236: Öffnung
- 301: Kupplungsscheibe
- 304: Trägerteil
- 305: Trägerteil
- 306: Federelement
- 311: Nietelement
- 314: Nietbereich
- 316: Einsenkung
- 317: Anschlag
- 320: Sicke
- 321: Sicke
- 325: Nietelement
- 326: Teilkreis
- 327: Teilkreis
- 328: Einsenkung
- 329: Nietbereich

- 401: Kupplungsscheibe
- 404: Trägerteil
- 405: Trägerteil
- 406: Federelement
- 411: Nietelement
- 414: Nietbereich
- 416: Einsenkung
- 420: Sicke
- 421: Sicke
- 425: Nietelement
- 426: Teilkreis
- 427: Teilkreis
- 428: Einsenkung
- 429: Nietbereich
- 501: Kupplungsscheibe
- 504: Trägerteil
- 505: Trägerteil
- 506: Federelement
- 506a: Federelement
- 507: Federsegment
- 507a: Federsegment
- 511: Nietelement
- 514: Nietbereich
- 516: Einsenkung
- 520: Sicke
- 521: Sicke
- 525: Nietelement
- 526: Teilkreis
- 527: Teilkreis
- 528: Einsenkung
- 529: Nietbereich
- 601: Kupplungsscheibe
- 604: Trägerteil
- 605: Trägerteil
- 606: Federelement
- 607: Federsegment
- 614: Nietbereich
- 615: Ausschnitt
- 616: Einsenkung
- 630: Zunge
- 631: Ausschnitt
- 632: Steg
- 633: Öffnung
- a: Abstand
- b: Breite
- r1: Verschleißreserve
- r2: Verschleißreserve
- s: Federweg

## Patentansprüche

1. Kupplungsscheibe (1, 101, 201, 301, 401, 501, 601) für eine Reibungskupplung mit zwei jeweils auf einem Trägerteil (4, 5, 104, 105, 204, 205, 304, 305, 404, 405, 504, 505, 604, 605) aufgenommenen Reibbelägen (8, 9, 108, 109, 208, 209) mit voneinander abgewandten Reibflächen (18, 19, 118, 119) und zumindest einem axial zwischen den Trägerteilen (4, 5, 104, 105, 204, 205, 304, 305, 404, 405, 504, 505, 604, 605) angeordneten, axial wirksamen Federelement (6, 106, 206, 306, 406, 506, 506a, 606) sowie einer die Trägerteile (4, 5, 104, 105, 204, 205, 304, 305, 404, 405, 504, 505, 604, 605) radial innerhalb der Reibbeläge (8, 9, 108, 109, 208, 209) aufnehmenden Mitnehmerscheibe (2), wobei eine an Ausschnitten (12, 13) der Reibbeläge (8, 9, 108, 109, 208, 209) wirksame Axialverbindung (10) die beiden Trägerteile (4, 5, 104, 105, 204, 205, 304, 305, 404, 405, 504, 505, 604, 605) entgegen der Wirkung des zumindest einen Federelements (6, 106, 206, 306, 406, 506, 506a, 606) axial verlagerbar aufnimmt, **dadurch gekennzeichnet, dass** zumindest eines der beiden Trägerteile (5, 105, 204, 205, 305, 404, 405, 505, 604, 605) in einem Kontaktbereich gegenüber der Axialverbindung (10) Ausschnitte (15, 615) des zumindest einen Federelements (6, 106, 206, 306, 406, 506, 506a, 606) übergreift und axial in Richtung des anderen Trägerteils (4, 104, 204, 205, 304, 404, 405, 504, 604, 605) Einsenkungen (16, 216, 224, 316, 328, 416, 428, 516, 528, 616) aufweist.

2. Kupplungsscheibe (1, 101, 201, 301, 401, 501, 601) nach Anspruch 1, **dadurch gekennzeichnet, dass** die Axialverbindung (10) aus über den Umfang verteilt angeordneten Nietelementen (11, 111, 211, 311, 325, 411, 425, 511, 525) gebildet ist, wobei jeweils ein Nietelement (11, 111, 211, 311, 325, 411, 425, 511, 525) ein Trägerteil fest (4, 104, 204, 205, 304, 404, 405, 504, 604, 605) aufnimmt und eine axiale Beabstandung des anderen Trägerteils (5, 105, 204, 205, 305, 404, 405, 505, 604, 605) mittels des zumindest einen Federelements (6, 106, 206, 306, 406, 506, 506a, 606) durch einen Anschlag (17, 317) des Nietelements (11, 111, 211, 311, 325, 411, 425, 511, 525) begrenzt ist.

3. Kupplungsscheibe (1, 101, 201, 301, 401, 501, 601) nach Anspruch 2, **dadurch gekennzeichnet, dass** zumindest ein Trägerteil (5, 105, 204, 205, 305, 404, 405, 505, 604, 605) die Nietelemente (11, 111, 211, 311, 325, 411, 425, 511, 525) umgebende napfförmige Einsenkungen (16, 216, 224, 316, 328, 416, 428, 516, 528, 616) in Richtung des anderen Trägerteils (4, 104, 204, 205, 304, 404, 405, 504, 604, 605) aufweist.

4. Kupplungsscheibe (1, 101, 301, 501) nach Anspruch 3, **dadurch gekennzeichnet, dass** lediglich an einem Trägerteil (5, 105, 305, 505) napfförmige Einsenkungen (16, 316, 328, 516, 528) vorgesehen sind.

5. Kupplungsscheibe (201, 401, 601) nach Anspruch 3, **dadurch gekennzeichnet, dass** an beiden Trägerteilen (204, 205, 404, 405, 604, 605) napfförmige Einsenkungen (216, 224, 416, 428, 616) vorgesehen sind.

6. Kupplungsscheibe (601) nach Anspruch 3, **dadurch gekennzeichnet, dass** an beiden Trägerteilen (604, 605) napfförmige Einsenkungen (616) mit planen Nietbereichen (614) über den Umfang abwechseln und jeweils eine napfförmige Einsenkung (616) eines Trägerteils (604, 605) einem planen Nietbereich (614) des anderen Trägerteils (605, 604) axial gegenüberliegt.

7. Kupplungsscheibe (1, 101, 201, 301, 401, 501, 601) nach einem der Ansprüche 1 bis 6, **dadurch gekennzeichnet, dass** die Trägerteile (4, 5, 104, 105, 204, 205, 304, 305, 404, 405, 504, 505, 604, 605) in einem axial vorgespannten Zustand der Reibbeläge (8, 9, 108, 109, 208, 209) im Bereich der Einsenkungen (16, 116, 216, 224, 316, 328, 416, 428, 516, 528, 616) aneinander anliegen.

8. Kupplungsscheibe (501) nach einem der Ansprüche 1 bis 7, **dadurch gekennzeichnet, dass** das zumindest eine Federelement (506, 506a) aus mehreren axial aneinander liegenden Blechteilen gebildet ist.

9. Kupplungsscheibe (101, 301, 401, 501) nach einem der Ansprüche 1 bis 8, **dadurch gekennzeichnet, dass** in zumindest einem Trägerteil (104, 105, 304, 305, 404, 405, 504, 505) eine umlaufende axial ausgeprägte Sicke (120, 121, 320, 321, 420, 421, 520, 521) vorgesehen ist.

10. Kupplungsscheibe (301, 401, 501) nach einem der Ansprüche 2 bis 9, **dadurch gekennzeichnet, dass** die Nietelemente (311, 325, 411, 425, 511, 525) auf zwei oder mehreren Teilkreisen (326, 327, 426, 427, 526, 527) unterschiedlichen Durchmessers angeordnet sind.

## Claims

1. Clutch disc (1, 101, 201, 301, 401, 501, 601) for a friction clutch, comprising two friction linings (8, 9, 108, 109, 208, 209), each of which is held on a carrier part (4, 5, 104, 105, 204, 205, 304, 305, 404, 405, 504, 505, 604, 605) and comprises friction surfaces (18, 19, 118, 119) facing away from each other, and comprising at least one axially effective spring element (6, 106, 206, 306, 406, 506, 506a, 606) arranged axially between the carrier parts (4, 5, 104, 105, 204, 205, 304, 305, 404, 405, 504, 505, 604, 605) and a driver disc (2) accommodating the carrier parts (4, 5, 104, 105, 204, 205, 304, 305, 404, 405, 504, 505, 604, 605) radially inside the friction linings(8, 9, 108, 109, 208, 209), an axial connection (10) acting at cut-outs (12, 13) of the friction linings (8, 9, 108, 109, 208, 209) accommodating the two carrier parts (4, 5, 104, 105, 204, 205, 304, 305, 404, 405, 504, 505, 604, 605) such that they can be displaced axially counter to the action of the at least one spring element (6, 106, 206, 306, 406, 506, 506a, 606),
**characterized in that** at least one of the two carrier parts (5, 105, 204, 205, 305, 404, 405, 505, 604, 605) engages over cut-outs (15, 615) of the at least one spring element (6, 106, 206, 306, 406, 506, 506a, 606) in a contact region opposite the axial connection (10), and has depressions (16, 216, 224, 316, 328, 416, 428, 516, 528, 616) axially in the direction of the other carrier part (4, 104, 204, 205, 304, 404, 405, 504, 604, 605).

2. Clutch disc (1, 101, 201, 301, 401, 501, 601) according to Claim 1, **characterized in that** the axial connection (10) is formed from rivet elements (11, 111, 211, 311, 325, 411, 425, 511, 525) arranged to be distributed over the circumference, wherein in each case a rivet element (11, 111, 211, 311, 325, 411, 425, 511, 525) holds a carrier part (4, 104, 204, 205, 304, 404, 405, 504, 604, 605) firmly, and an axial spacing of the other carrier part (5, 105, 204, 205, 305, 404, 405, 505, 604, 605) by means of the at least one spring element (6, 106, 206, 306, 406, 506, 506a, 606) is limited by a stop (17, 317) of the rivet element (11, 111, 211, 311, 325, 411, 425, 511, 525).

3. Clutch disc (1, 101, 201, 301, 401, 501, 601) according to Claim 2, **characterized in that** at least one carrier part (5, 105, 204, 205, 305, 404, 405, 505, 604, 605) has bowl-shaped depressions (16, 216, 224, 316, 328, 416, 428, 516, 528, 616) surrounding the rivet elements (11, 111, 211, 311, 325, 411, 425, 511, 525) in the direction of the other carrier part (4, 104, 204, 205, 304, 404, 405, 504, 604, 605).

4. Clutch disc (1, 101, 301, 501) according to Claim 3, **characterized in that** bowl-shaped depressions (16, 316, 328, 516, 528) are provided only on one carrier part (5, 105, 305, 505).

5. Clutch disc (201, 401, 601) according to Claim 3, **characterized in that** bowl-shaped depressions (216, 224, 416, 428, 616) are provided on both carrier parts (204, 205, 404, 405, 604, 605).

6. Clutch disc (601) according to Claim 3, **characterized in that** bowl-shaped depressions (616) with planar rivet regions (614) alternate over the circumference on both carrier parts (604, 605), and a respective bowl-shaped depression (616) of a carrier part (604, 605) is located axially opposite a planar rivet region (614) of the other carrier part (605, 604).

7. Clutch disc (1, 101, 201, 301, 401, 501, 601) according to one of Claims 1 to 6, **characterized in that**, in an axially preloaded state of the friction linings (8, 9, 108, 109, 208, 209), the carrier parts (4, 5, 104, 105, 204, 205, 304, 305, 404, 405, 504, 505, 604, 605) rest on one another in the region of the depressions (16, 116, 216, 224, 316, 328, 416, 428, 516, 528, 616).

8. Clutch disc (501) according to one of Claims 1 to 7, **characterized in that** the at least one spring element (506, 506a) is formed from multiple sheet metal parts resting axially on one another.

9. Clutch disc (101, 301, 401, 501) according to one of Claims 1 to 8, **characterized in that** a circumferential axially stamped bead (120, 121, 320, 321, 420, 421, 520, 521) is provided in at least one carrier part (104, 105, 304, 305, 404, 405, 504, 505).

10. Clutch disc (301, 401, 501) according to one of Claims 2 to 9, **characterized in that** the rivet elements (311, 325, 411, 425, 511, 525) are arranged on two or more pitch circles (326, 327, 426, 427, 526, 527) of different diameter.

## Revendications

1. Disque d'embrayage (1, 101, 201, 301, 401, 501, 601) pour un embrayage à friction comprenant deux garnitures de friction (8, 9, 108, 109, 208, 209) reçues à chaque fois sur une partie de support (4, 5, 104, 105, 204, 205, 304, 305, 404, 405, 504, 505, 604, 605) avec des surfaces de friction mutuellement opposées (18, 19, 118, 119) et au moins un élément de ressort (6, 106, 206, 306, 406, 506, 506a, 606) agissant axialement, disposé axialement entre les parties de support (4, 5, 104, 105, 204, 205, 304, 305, 404, 405, 504, 505, 604, 605) ainsi qu'un disque d'entraînement (2) recevant les parties de support (4, 5, 104, 105, 204, 205, 304, 305, 404, 405, 504, 505, 604, 605) radialement à l'intérieur des garnitures de friction (8, 9, 108, 109, 208, 209), une liaison axiale (10) agissant sur des portions (12, 13) des garnitures de friction (8, 9, 108, 109, 208, 209) recevant de manière déplaçable axialement les deux parties de support (4, 5, 104, 105, 204, 205, 304, 305, 404, 405, 504, 505, 604, 605) à l'encontre de l'effet de l'au moins un élément de ressort (6, 106, 206, 306, 406, 506, 506a, 606), **caractérisé en ce qu'**au moins l'une des deux parties de support (5, 105, 204, 205, 305, 404, 405, 505, 604, 605), dans une région de contact par rapport à la liaison axiale (10), vient en prise par le dessus avec des portions (15, 615) de l'au moins un élément de ressort (6, 106, 206, 306, 406, 506, 506a, 606) et présente, axialement dans la direction de l'autre partie de support (4, 104, 204, 205, 304, 404, 405, 504, 604, 605), des renfoncements (16, 216, 224, 316, 328, 416, 428, 516, 528, 616).

2. Disque d'embrayage (1, 101, 201, 301, 401, 501, 601) selon la revendication 1, **caractérisé en ce que** la liaison axiale (10) est formée d'éléments de rivetage (11, 111, 211, 311, 325, 411, 425, 511, 525) disposés de manière répartie sur la périphérie, à chaque fois un élément de rivetage (11, 111, 211, 311, 325, 411, 425, 511, 525) recevant fixement une partie de support (4, 104, 204, 205, 304, 404, 405, 504, 604, 605) et un espacement axial de l'autre partie de support (5, 105, 204, 205, 305, 404, 405, 505, 604, 605) étant limité au moyen de l'au moins un élément de ressort (6, 106, 206, 306, 406, 506, 506a, 606) par une butée (17, 317) de l'élément de rivetage (11, 111, 211, 311, 325, 411, 425, 511, 525).

3. Disque d'embrayage (1, 101, 201, 301, 401, 501, 601) selon la revendication 2, **caractérisé en ce qu'**au moins une partie de support (5, 105, 204, 205, 305, 404, 405, 505, 604, 605) présente des renfoncements en forme de cuvette (16, 216, 224, 316, 328, 416, 428, 516, 528, 616) entourant les éléments de rivetage (11, 111, 211, 311, 325, 411, 425, 511, 525) dans la direction de l'autre partie de support (4, 104, 204, 205, 304, 404, 405, 504, 604, 605).

4. Disque d'embrayage (1, 101, 301, 501) selon la revendication 3, **caractérisé en ce que** des renfoncements en forme de cuvette (16, 316, 328, 516, 528) sont présents seulement au niveau d'une partie de support (5, 105, 305, 505).

5. Disque d'embrayage (201, 401, 601) selon la revendication 3, **caractérisé en ce que** des renfoncements en forme de cuvette (216, 224, 416, 428, 616) sont prévus au niveau des deux parties de support (204, 205, 404, 405, 604, 605).

6. Disque d'embrayage (601) selon la revendication 3, **caractérisé en ce que** des renfoncements en forme de cuvette (616) alternent avec des régions de rivetage (614) au niveau des deux parties de support (604, 605) sur la périphérie et à chaque fois un renfoncement en forme de cuvette (616) d'une partie de support (604, 605) est axialement opposé à une région de rivetage plane (614) de l'autre partie de support (605, 604).

7. Disque d'embrayage (1, 101, 201, 301, 401, 501, 601) selon l'une quelconque des revendications 1 à 6, **caractérisé en ce que** les parties de support (4, 5, 104, 105, 204, 205, 304, 305, 404, 405, 504, 505, 604, 605), dans un état précontraint axialement des garnitures de friction (8, 9, 108, 109, 208, 209), s'appliquent les unes contre les autres dans la région des renfoncements (16, 116, 216, 224, 316, 328, 416, 428, 516, 528, 616).

8. Disque d'embrayage (501) selon l'une quelconque des revendications 1 à 7, **caractérisé en ce que** l'au moins un élément de ressort (506, 506a) est formé de plusieurs parties en tôle situées axialement les unes contre les autres.

9. Disque d'embrayage (101, 301, 401, 501) selon l'une quelconque des revendications 1 à 8, **caractérisé en ce que** dans au moins une partie de support (104, 105, 304, 305, 404, 405, 504, 505) est prévue une moulure (120, 121, 320, 321, 420, 421, 520, 521) périphérique axialement en relief.

10. Disque d'embrayage (301, 401, 501) selon l'une quelconque des revendications 2 à 9, **caractérisé en ce que** les éléments de rivetage (311, 325, 411, 425, 511, 525) sont disposés sur deux ou plus de deux cercles partiels (326, 327, 426, 427, 526, 527) de diamètres différents.
